# EUROPÄISCHE PATENTSCHRIFT

(11) **EP 2 340 120 B1**
(45) Veröffentlichungstag und Bekanntmachung des Hinweises auf die Patenterteilung: **23.05.2018**
(21) Anmeldenummer: 09783875.9
(22) Anmeldetag: 09.10.2009
(51) Int. Cl.: B01J 38/20, B01J 38/16, B01J 38/14, B01J 38/06, B01J 23/92

(54) **VERFAHREN ZUR ENTFERNUNG VON KOHLENSTOFFHALTIGEN ABLAGERUNGEN AUF OBERFLÄCHEN VON KATALYSATOREN UND ANLAGENTEILEN**
METHOD FOR REMOVING CARBONACEOUS DEPOSITS FROM SURFACES OF CATALYSTS AND PLANT COMPONENTS
PROCÉDÉ POUR ÉLIMINER DES DÉPÔTS CONTENANT DU CARBONE SUR DES SURFACES DE CATALYSEUR ET DE PARTIES D'INSTALLATION

(30) Priorität: 20.10.2008 EP 08167023
(43) Veröffentlichungstag der Anmeldung: 06.07.2011
(73) Patentinhaber: BASF SE, 67056 Ludwigshafen am Rhein (DE)
(72) Erfinder: WINTER, Manfred, 67596 Dittelsheim-Heßloch (DE); WEIGL, Hagen, 68526 Ladenburg (DE); KRAMER, Andreas, 67159 Friedelsheim (DE)
(74) Vertreter: Peatfield, Jeremy William
(86) Internationale Anmeldenummer: PCT/EP2009/063141
(87) Internationale Veröffentlichungsnummer: WO 2010/046244

(56) Entgegenhaltungen:
- EP-A- 1 241 154
- EP-A2- 0 071 137
- US-A- 4 274 942

## Beschreibung

Die Erfindung betrifft ein Verfahren zur Entfernung von kohlenstoffhaltigen Ablagerungen auf Oberflächen von Katalysatoren und Anlagenteilen durch Behandeln der Ablagerungen mit einem zumindest zeitweise mit einem sauerstoffhaltigen Gas versetzten, überhitzten Wasserdampfstrom.

Aus der EP-A-1 241 154 ist ein Verfahren zur Regenerierung eines ZeolithKatalysators bekannt, wobei man einen zumindest zeitweise mit einem sauerstoffhaltigen Gas oder Gasgemisch versetzten Wasserdampfstrom durch den Reaktor leitet. Temperatur und Sauerstoffgehalt des Wasserdampfstroms werden derart abgestimmt, dass die Zündtemperatur der Koksablagerungen erreicht wird, d.h. die Regenerierung des Katalysators erfolgt mit überhitztem Wasserdampf, der zumindest zeitweise ein sauerstoffhaltiges Gas enthält.

US 4274942 beschreibt ein Verfahren zur Kontrolle von Schwefeloxid-Emissionen in die Atmosphäre bei der Regenerierung von Fluid Catalytic Cracking-Katalysatoren, welche kohlenstoffhaltige Ablagerungen mit Schwefel enthalten. Die Regenerierung erfordert zunächst den Kontakt des Katalysators mit einer Sauerstoffquelle in Gegenwart von Wasserdampf, wobei eine vorgegebene Menge an Sauerstoff so begrenzt wird, dass der Kohlenstoff teilweise oxidiert. Danach wird der teilweise regenerierte Katalysator mit Luft in Kontakt gebracht, um restliche kohlenstoffhaltige Ablagerungen zu verbrennen und die Verbrennungsprodukte aus dem regenerierten Katalysator abzutrennen.

Die Regenerierung von Katalysatoren mit überhitztem Wasserdampf und Sauerstoff ist bekannt. Sie erfolgt beispielsweise nach den Angaben in der US-A-4,276,150 bei Temperaturen in dem Bereich von etwa 595 bis 1220 °C, nach EP-A- 0 071 137 bei 300 bis 450 °C und nach WO-A-02/45852 bei 300 bis 800 °C.

Aufgabe der Erfindung ist es, ein weiteres Verfahren zur Entfernung von kohlenstoffhakigen Ablagerungen auf Oberflächen von Katalysatoren und Anlagenteilen zur Verfügung zu stellen.

Die Aufgabe wird erfindungsgemäß gelöst mit einem Verfahren zur Entfernung von kohlenstoffhaltigen Ablagerungen auf Oberflächen von Katalysatoren und Anlagenteilen durch Behandeln der Ablagerungen mit einem zumindest zeitweise mit einem sauerstoffhaltigen Gas versetzten überhitzten Wasserdampfstrom, wenn man, jeweils unter Kontrolle des CO₂-Gehalts im Abgas nach einer Kondensation des Wasserdampfs, bei einer Temperatur von mindestens 300 °C
(a) die kohlenstoffhaltigen Ablagerungen mit überhitztem Wasserdampf einer Temperatur von mindestens 300 °C solange behandelt, bis der CO₂-Gehalt des Abgases ein Maximum überschritten hat,
(b) dann unter weiterer Zufuhr von überhitztem Wasserdampf mit der Zufuhr von Sauerstoff beginnt, wobei die zugeführte Menge an Sauerstoff so eingestellt wird, dass der CO₂-Gehalt im Abgas weiter abnimmt, bis er auf einen Wert von <1 Vol.-% gesunken ist, und anschließend
(c) über die noch verbliebenen Mengen an kohlenstoffhaltigen Ablagerungen solange ein sauerstoffhaltiges Gas leitet und die Zufuhr von überhitztem Wasserdampf beendet, bis die Ablagerungen praktisch entfernt sind.

Mit Hilfe dieses Verfahrens ist es möglich, innerhalb eine Anlage einen mit kohlenstoffhaltigen Ablagerungen belegten Katalysator schonend zu regenerieren und Anlagenteile wie Reaktoren oder Kolonnen, die kohlenstoffhaltige Ablagerungen enthalten, schonend zu reinigen. Während der Entfernung der kohlenstoffhaltigen Ablagerungen treten praktisch keine Temperaturspitzen auf, so dass auch keine Gefahr eines Metallbrandes innerhalb der Anlage besteht. Der mit Ablagerungen belegte Katalysator kann direkt im Reaktor regeneriert werden. Damit erübrigt sich der Ausbau des verunreinigten Katalysators bzw. von verunreinigten Füllkörpern einer Kolonne. Dadurch wird eine mechanische Zerstörung von Katalysatoren bzw. Füllkörpern vermieden.

Bei der katalytischen Umsetzung von organischen Verbindungen bilden sich auf dem Katalysator und in Teilen der Anlage meistens kohlenstoffhaltige Ablagerungen. Diese Erscheinung wird insbesondere bei der Herstellung von Monomeren beobachtet. Die Ablagerungen vermindern die Aktivität des Katalysators, weil sie die aktive Oberfläche des Katalysators verringern. Im Extremfall führen sie zu einem so hohen Druckverlust in der Produktionsanlage, dass die Anlage abgeschaltet werden muß. Aus der EP-A-0 184 074 ist ein solches Verfahren zur Herstellung von N-Vinylformamid durch Pyrolyse von Formylalaninnitril in Gegenwart von Feststoffen als Katalysator unter vermindertem Druck bei Temperaturen von 250 bis 650 °C bekannt. Als Katalysatoren kommen vorzugsweise Aluminiumoxide in Betracht, die beispielsweise mit Kaliumionen aktiviert sind. Bei diesem Verfahren bilden sich sowohl auf dem Katalysator als auch in Teilen des Reaktors kohlenstoffhaltige Ablagerungen. Es kann sich dabei um Verkokungen oder um unlösliche Polymerisate handeln. So kommt es beispielsweise innerhalb der Kolonne zu einer unerwünschten Polymerisation von N-Vinylformamid. Die darin entstehenden Polymeren sind praktisch in allen Lösemitteln unlöslich. Die beschriebenen Ablagerungen können jedoch mit Hilfe des erfindungsgemäßen Verfahrens schonend entfernt werden.

Kohlenstoffhaltige Ablagerungen auf Katalysatoren, insbesondere diejenigen kohlenstoffhaltigen Ablagerungen, die bei der Herstellung von N-Vinylformamid nach dem Verfahren der EP-A-0 184 074 entstehen, werden nach dem erfindungsgemäßen Verfahren bei Temperaturen in dem Bereich von 300 bis 600 °C, vorzugsweise 400 bis 600 °C, insbesondere 450 bis 550 °C von den Oberflächen von Katalysatoren und von den Innenwänden von Anlagenteilen entfernt. Die Regenerierung der Katalysatoren kann nach Ausbau aus der Anlage in einem separaten Reaktor vorgenommen werden, erfolgt aber vorzugsweise innerhalb der Produktionsanlage. Für die Entfernung der kohlenstoffhaltigen Ablagerungen kann der für die Regenerierung des Katalysators vorgesehene Reaktor bzw. der Reaktor der Produktionsanlage elektrisch oder mit Hilfe eines Salzbades auf die erforderliche Temperatur erhitzt werden. Es ist jedoch auch möglich, die Reaktoren bzw. die mit kohlenstoffhaltigen Ablagerungen belegten Innenteile von Anlagen mit Hilfe von überhitztem Wasserdampf zu beheizen.

Im Verfahrensschritt (a) leitet man beispielsweise überhitzten Wasserdampf, der eine Temperatur in dem Bereich von z.B. 300 bis 600 °C hat, in den Reaktor, der die mit kohlenstoffhaltigen Ablagerungen versehenen Katalysatoren enthält und meistens selbst auch kohlenstoffhaltige Ablagerungen an den Innenwänden aufweist. In der bevorzugten Ausführungsform des erfindungsgemäßen Verfahrens leitet man in den Verfahrensschritten (a), (b) und (c) zusätzlich jeweils Stickstoff und/oder ein anderes inertes Gas in den Reaktor. Die bei der endothermen Reaktion von Wasserdampf mit den kohlenstoffhaltigen Ablagerungen entstehenden Gase wie Wasserstoff, Kohlenmonoxid und Kohlendioxid werden durch das Einleiten von Stickstoff verdünnt und aus dem Reaktor ausgeschleust. Der Stickstoff dient praktisch als Schleppgas. Bezogen auf die innenliegende Leerrohroberfläche des Apparateteiles bzw. des Reaktors, der den zu behandelnden Katalysator enthält, werden beispielsweise 0 bis 90 Nm³/m^{2.}h, vorzugsweise 1 bis 75 Nm³/m^{2.}h und insbesondere 25 bis 35 Nm³/m^{2.}h Stickstoff oder ein anderes Inertgas eingesetzt.

Die angewendete Dampfmenge kann ebenfalls in einem weiten Bereich schwanken. Beispielsweise setzt man, bezogen auf die innere Leerrohroberfläche des Apparateteiles oder des Reaktors, 30 bis 550 kg/m^{2.}h, vorzugsweise 45 bis 450 kg/m^{2.}h ein.

Nach dem Verlassen des Reaktors, in dem die Regenerierung des Katalysators vorgenommen wird, wird das Abgas gequencht, so dass es z.B. mit einer Temperatur von 40 °C entweicht. Der zugeführte Dampf wird kondensiert. Das Abgas wird während der Regenerierung des Katalysators laufend analysiert. Es enthält Wasserstoff, Kohlenmonoxid und Kohlendioxid. Der Fortgang der Entfernung von kohlenstoffhaltigen Ablagerungen wird an Hand der CO₂-Konzentration im Abgas verfolgt. Sie beträgt zuerst 0 % und steigt nach dem Einsetzen der Reaktion zunächst auf einen Wert von beispielsweise bis zu 30 Vol.-%, meistens 25 Vol.-% an. Falls Stickstoff oder ein anderes Inertgas als Schleppgas zusätzlich zum überhitzten Wasserdampf verwendet wird, so ist diese Maßnahme bei der Analyse des Abgases selbstverständlich zu berücksichtigen. Um eine zutreffende Aussage über den CO₂-Gehalt im Abgas nach der Kondensation des Wasserdampfs machen zu können, hält man vorzugsweise die jeweils zugeführte Menge an Stickstoff oder eines anderen Inertgases konstant. So ist beispielsweise bei einer Änderung der zugeführten Stickstoffmenge im Verfahrensschritts (a) die CO₂-Menge im Abgas nach der Kondensation des Wasserdampfs entsprechend der zugeführten Stickstoffmenge zu korrigieren, um eine Kontrolle über den Verlauf der Reaktion zu haben.

Wenn der CO₂-Gehalt des Abgases ein Maximum überschritten hat, wird im Verfahrensschritt (b) unter weiterer Zufuhr von überhitztem Wasserdampf mit der Zufuhr von Sauerstoff begonnen, wobei die zugeführte Menge an Sauerstoff so eingestellt wird, dass der CO₂-Gehalt im Abgas weiter abnimmt, bis er auf einen Wert von <1 Vol.-% gesunken ist. Vorzugsweise senkt man im Verfahrensschritt (b) den CO₂-Gehalt im Abgas nach der Kondensation des Wasserdampfs bis auf einen Wert <0,5 Vol.-% ab. Im Verfahrensschritt (b) wird gleichzeitig Wasserdampf und ein sauerstoffhaltiges Gas verwendet. Das sauerstoffhaltige Gas ist entweder Luft oder besteht vorzugsweise aus einem Gemisch von Stickstoff und Sauerstoff. Die Sauerstoffkonzentration dieses Gasgemisches beträgt beispielsweise 0,01 bis 30 Vol.-%, vorzugsweise 5 bis 22 Vol.-%. Sie wird so geregelt, dass der CO₂-Gehalt des Abgases nach dem Kondensieren des Wasserdampfs weiter abnimmt. Dadurch werden Temperaturspitzen beim Regenerieren des Katalysators bzw. beim Entfernen von Ablagerungen aus Anlagenteilen vermieden.

Im Verfahrensschritt (b) wird - sobald das Maximum des CO₂-Gehalts im Abgas nach der Kondensation von Wasserdampf überschritten ist - mit der Zufuhr von Sauerstoff begonnen. Beispielsweise beginnt man mit der Sauerstoffzufuhr, wenn der CO₂-Gehalt im Abgas nach der Kondensation des Wasserdampfs auf einen Wert von weniger als 95 %, vorzugsweise weniger als 90 % des Maximalwerts gefallen ist. Meistens erfolgt die Sauerstoffzufuhr dann, wenn der CO₂-Gehalt des Abgases in dem Bereich von 85 bis 95 % des Maximalwerts liegt.

Im Verfahrensschritt (c) leitet man über die noch verbliebenen Mengen an kohlenstoffhaltigen Ablagerungen solange Luft oder ein sauerstoffhaltiges Gasgemisch und beendet die Zufuhr von überhitztem Wasserdampf, bis die Ablagerungen praktisch entfernt sind. Hierbei wird das Volumenverhältnis von überhitztem Wasserdampf zu sauerstoffhaltigem Gas schrittweise oder kontinuierlich in der Weise verändert, dass unter Erhöhung des Anteils an sauerstoffhaltigem Gas oder Luft der Anteil an Wasserdampf auf 0 Vol.-% zurückgenommen wird. Der Sauerstoffgehalt des Gasstroms aus zugeführtem Wasserdampf, Sauerstoff und Stickstoff beträgt beispielsweise 0,01 bis 35 Vol.-%, vorzugsweise 1 bis 22 Vol.-%. Nach Beendigung der Wasserdampfzugabe im Verfahrensschritt (c) werden die restlichen noch vorhandenen kohlenstoffhaltigen Ablagerungen mit einem Gasgemisch aus Stickstoff und Sauerstoff, vorzugsweise Luft, behandelt, bis die Ablagerungen praktisch entfernt sind.

Bei dieser Verfahrensführung bleibt die Temperatur im Reaktor während des Entfernens von kohlenstoffhaltigen Ablagerungen praktisch konstant bzw. ändert sich nur geringfügig. Temperaturspitzen werden vermieden. Die Gefahr einer Zündung von Wasserstoff und Kohlenmonoxid wird bei dem erfindungsgemäßen Verfahren vermieden.

Mit Hilfe des erfindungsgemäßen Verfahrens können sowohl kohlenstoffhaltige Ablagerungen auf Oberflächen von Katalysatoren als auch kohlenstoffhaltige Ablagerungen auf Oberflächen von Anlagenteilen schonend entfernt werden. Die Art der kohlenstoffhaltigen Ablagerungen ist nicht entscheidend. Man kann erfindungsgemäß Katalysatoren regenerieren, die beispielsweise bei einer Synthese von Monomeren eingesetzt werden oder auch solche Katalysatoren, die bei der Dehydrierung von C₂- bis C₃₀-Kohlenwasserstoffen verwendet werden.

### Beispiel

Bei der Herstellung von N-Vinylformamid nach dem Verfahren der EP-A-0 184 074 bildeten sich auf dem Katalysator und an den Innenwänden des Reaktors kohlenstoffhaltige Ablagerungen, die den Umsatz erniedrigten und zu einem Druckverlust in der Anlage führten. Der Katalysator bestand aus Aluminiumoxid, das mit Kaliumionen aktiviert war. Um die kohlenstoffhaltigen Ablagerungen auf dem Katalysator und im Reaktor zu entfernen, wurde der Reaktor mit Hilfe eines Salzbades auf eine Temperatur von 530 °C erhitzt. Man leitete 200 l/h Stickstoff und 1 kg/h überhitzten Wasserdampf mit einer Temperatur von jeweils 530 °C von oben durch den Reaktor. Der am unteren Ende des Reaktors austretende Gasstrom wurde in einer Kolonne mit Wasser gequencht, wobei der dem Reaktor zugeführte überschüssige Wasserdampf kondensiert und in das Abwasser geleitet wurde. Das Abgas entwich am Kopf der Kolonne. Es hatte eine Temperatur von 40 °C und wurde fortwährend auf den CO₂-Gehalt untersucht. Der CO₂-Gehalt des Abgases stieg bis auf einen Wert von 22 Vol.-% an und fiel dann ab. Nachdem der CO₂-Gehalt bis auf 90 % des maximalen CO₂-Gehalts gesunken war, führte man zunächst 200 l/h Luft zusätzlich in den Reaktor und erhöhte die Luftmenge schrittweise auf 750 l/h, wobei man die Luftmenge so regelte, dass der CO₂-Gehalt im Abgas nach der Kondensation des Wasserdampfs stetig abnahm. Nachdem der CO₂-Gehalt im Abgas nach der Kondensation des Wasserdampfs auf einen Wert von 0,45 Vol.-% gesunken war, wurde die zugeführte Wasserdampfmenge schrittweise zurückgenommen und die Wasserdampfzufuhr schließlich beendet. Der Anteil der Luft, die dem Reaktor zugeführt wurde, wurde auf 1300 l/h erhöht. Nach einer Laufzeit von insgesamt 15 Stunden betrug der CO₂-Gehalt im Abgas 0,05 Vol.-%. Katalysator und Reaktor waren nach dieser Zeit fast vollständig von kohlenstoffhaltigen Ablagerungen befreit.

## Patentansprüche

1. Verfahren zur Entfernung von kohlenstoffhaltigen Ablagerungen auf Oberflächen von Katalysatoren und Anlagenteilen durch Behandeln der Ablagerungen mit einem zumindest zeitweise mit einem sauerstoffhaltigen Gas versetzten, überhitzten Wasserdampfstrom, **dadurch gekennzeichnet, dass** man, jeweils unter Kontrolle des CO₂-Gehalts im Abgas nach einer Kondensation des Wasserdampfs, bei einer Temperatur von mindestens 300 °C
(a) die kohlenstoffhaltigen Ablagerungen mit überhitztem Wasserdampf einer Temperatur von mindestens 300 °C solange behandelt, bis der CO₂-Gehalt des Abgases ein Maximum überschritten hat,
(b) dann unter weiterer Zufuhr von überhitztem Wasserdampf mit der Zufuhr von Sauerstoff beginnt, wobei die zugeführte Menge an Sauerstoff so eingestellt wird, dass der CO₂-Gehalt im Abgas weiter abnimmt, bis er auf einen Wert von <1 Vol.-% gesunken ist, und anschließend
(c) über die noch verbliebenen Mengen an kohlenstoffhaltigen Ablagerungen solange ein sauerstoffhaltiges Gas leitet und die Zufuhr von überhitztem Wasserdampf beendet, bis die Ablagerungen praktisch entfernt sind.

2. Verfahren nach Anspruch 1, **dadurch gekennzeichnet, dass** man die kohlenstoffhaltigen Ablagerungen bei Temperaturen in dem Bereich von 400 bis 600 °C von den Oberflächen der Katalysatoren und der Anlagenteile entfernt.

3. Verfahren nach Anspruch 1 oder 2, **dadurch gekennzeichnet, dass** man in den Verfahrensschritten (a), (b) und (c) zusätzlich jeweils Stickstoff zuführt.

4. Verfahren nach einem der Ansprüche 1 bis 3, **dadurch gekennzeichnet, dass** man im Verfahrensschritt (b) den CO₂-Gehalt im Abgas nach der Kondensation des Wasserdampfs bis auf einen Wert <0,5 Vol.-% absenkt.

5. Verfahren nach einem der Ansprüche 1 bis 4, **dadurch gekennzeichnet, dass** man im Verfahrensschritt (b) dann mit der Zufuhr von Sauerstoff beginnt, wenn der CO₂-Gehalt im Abgas nach der Kondensation des Wasserdampfs auf einen Wert von weniger als 95 % des Maximalwerts gefallen ist.

6. Verfahren nach einem der Ansprüche 1 bis 5, **dadurch gekennzeichnet, dass** man im Verfahrensschritt (c) das Volumenverhältnis von überhitztem Wasserdampf zu sauerstoffhaltigem Gas schrittweise oder kontinuierlich in der Weise verändert, dass unter Erhöhung des Anteils an sauerstoffhaltigem Gas der Anteil an Wasserdampf auf 0 Vol.-% zurückgenommen wird.

7. Verfahren nach einem der Ansprüche 1 bis 6, **dadurch gekennzeichnet, dass** man kohlenstoffhaltige Ablagerungen auf Oberflächen von Katalysatoren entfernt.

8. Verfahren nach einem der Ansprüche 1 bis 6, **dadurch gekennzeichnet, dass** man kohlenstoffhaltige Ablagerungen auf Oberflächen von Anlagenteilen entfernt.

## Claims

1. A process for removing carbonaceous deposits on surfaces of catalysts and plant parts by treating the deposits with a superheated stream of steam admixed at least temporarily with an oxygenous gas, which comprises, in each case with monitoring of the CO₂ content in the offgas after condensation of the steam, at a temperature of at least 300°C,
(a) treating the carbonaceous deposits with superheated steam at a temperature of at least 300°C until the CO₂ content of the offgas has exceeded a maximum,
(b) then, with further supply of superheated steam, commencing the supply of oxygen, the amount of oxygen supplied being adjusted such that the CO₂ content in the offgas decreases further until it has fallen to a value of <1% by volume, and then
(c) ending the supply of superheated steam and passing an oxygenous gas over the amounts of carbonaceous deposits still remaining until the deposits have been virtually removed.

2. The process according to claim 1, wherein the carbonaceous deposits are removed at temperatures in the range from 400 to 600°C from the surfaces of the catalysts and of the plant parts.

3. The process according to claim 1 or 2, wherein nitrogen is additionally supplied in each of process steps (a), (b) and (c).

4. The process according to any one of claims 1 to 3, wherein the CO₂ content in the offgas after the condensation of the steam is lowered in process step b) down to a value of <0.5% by volume.

5. The process according to any one of claims 1 to 4, wherein the supply of oxygen is commenced in process step (b) when the CO₂ content in the offgas after the condensation of the steam has fallen to a value of less than 95% of the maximum value.

6. The process according to any one of claims 1 to 5, wherein the volume ratio of superheated steam to oxygenous gas in process step (c) is varied stepwise or continuously in such a way that the proportion of steam is reduced to 0% by volume while increasing the proportion of oxygenous gas.

7. The process according to any one of claims 1 to 6, wherein carbonaceous deposits on surfaces of catalysts are removed.

8. The process according to any one of claims 1 to 6, wherein carbonaceous deposits on surfaces of plant parts are removed.

## Revendications

1. Procédé d'élimination de dépôts contenant du carbone sur des surfaces de catalyseurs et de parties d'unités par traitement des dépôts avec un courant de vapeur d'eau surchauffé au moins temporairement mélangé avec un gaz contenant de l'oxygène, **caractérisé en ce que**, à chaque fois sous contrôle de la teneur en CO₂ du gaz d'échappement après une condensation de la vapeur d'eau, à une température d'au moins 300 °C,
(a) les dépôts contenant du carbone sont traités avec de la vapeur d'eau surchauffée d'une température d'au moins 300 °C jusqu'à ce que la teneur en CO₂ du gaz d'échappement ait dépassé un maximum,
(b) puis, avec introduction supplémentaire de vapeur d'eau surchauffée, l'introduction de l'oxygène débute, la quantité d'oxygène introduite étant ajustée de sorte que la teneur en CO₂ du gaz d'échappement chute davantage, jusqu'à ce qu'elle ait chuté à une valeur < 1 % en volume, puis
(c) un gaz contenant de l'oxygène est conduit sur les quantités encore restantes de dépôts contenant du carbone et l'introduction de vapeur d'eau surchauffée est terminée, jusqu'à ce que les dépôts soient pratiquement éliminés.

2. Procédé selon la revendication 1, **caractérisé en ce que** les dépôts contenant du carbone sont éliminés à des températures dans la plage allant de 400 à 600 °C des surfaces des catalyseurs et des parties d'unités.

3. Procédé selon la revendication 1 ou 2, **caractérisé en ce que** de l'azote est en outre introduit à chaque fois dans les étapes de procédé (a), (b) et (c).

4. Procédé selon l'une quelconque des revendications 1 à 3, **caractérisé en ce qu'**à l'étape de procédé (b), la teneur en CO₂ du gaz d'échappement après la condensation de la vapeur d'eau chute jusqu'à une valeur < 0,5 % en volume.

5. Procédé selon l'une quelconque des revendications 1 à 4, **caractérisé en ce qu'**à l'étape de procédé (b), l'introduction d'oxygène débute lorsque la teneur en CO₂ du gaz d'échappement après la condensation de la vapeur d'eau a chuté à une valeur inférieure à 95 % de la valeur maximale.

6. Procédé selon l'une quelconque des revendications 1 à 5, **caractérisé en ce qu'**à l'étape de procédé (c), le rapport volumique entre la vapeur d'eau surchauffée et le gaz contenant de l'oxygène est modifié graduellement ou en continu de sorte que la proportion de vapeur d'eau soit ramenée à 0 % en volume avec augmentation de la proportion de gaz contenant de l'oxygène.

7. Procédé selon l'une quelconque des revendications 1 à 6, **caractérisé en ce que** des dépôts contenant du carbone sont éliminés sur des surfaces de catalyseurs.

8. Procédé selon l'une quelconque des revendications 1 à 6, **caractérisé en ce que** des dépôts contenant du carbone sont éliminés sur des surfaces de parties d'unités.
